# EUROPEAN PATENT SPECIFICATION

(11) **EP 1 108 644 B1**
(45) Date of publication and mention of the grant of the patent: **02.03.2005**
(21) Application number: 00125127.1
(22) Date of filing: 17.11.2000
(51) Int. Cl.: B62K 19/46, B62K 11/04

(54) **Battery arranging construction for a two-wheeled vehicle**
Batterieanordnung für Zweirad- Fahrzeug
Construction de batterie pour un véhicule à deux roues

(30) Priority: 17.12.1999 JP 35996999
(43) Date of publication of application: 20.06.2001
(73) Proprietor: Honda Giken Kogyo Kabushiki Kaisha, Minato-ku, Tokyo (JP)
(72) Inventor: Kikuno, Junji, Wako-shi, Saitama (JP); Hosoya, Yukio, Wako-shi, Saitama (JP); Tateishi, Seiichi, Wako-shi, Saitama (JP)
(74) Representative: Liska, Horst, Dr.-Ing.

(56) References cited:
- EP-A- 0 463 942
- GB-A- 830 467
- US-A- 3 779 597
- US-A- 4 802 682
- US-A- 5 147 077
- US-A- 5 172 788
- PATENT ABSTRACTS OF JAPAN vol. 017, no. 279 (M-1419), 28 May 1993 (1993-05-28) & JP 05 008775 A (HONDA MOTOR CO LTD), 19 January 1993 (1993-01-19)
- PATENT ABSTRACTS OF JAPAN vol. 017, no. 092 (M-1371), 23 February 1993 (1993-02-23) & JP 04 287782 A (SUZUKI MOTOR CORP), 13 October 1992 (1992-10-13)

## Description

The present invention relates to a motor scooter type two-wheeled vehicle according to the preamble of claim 1. Such a vehicle is known from document US 4 802 682.

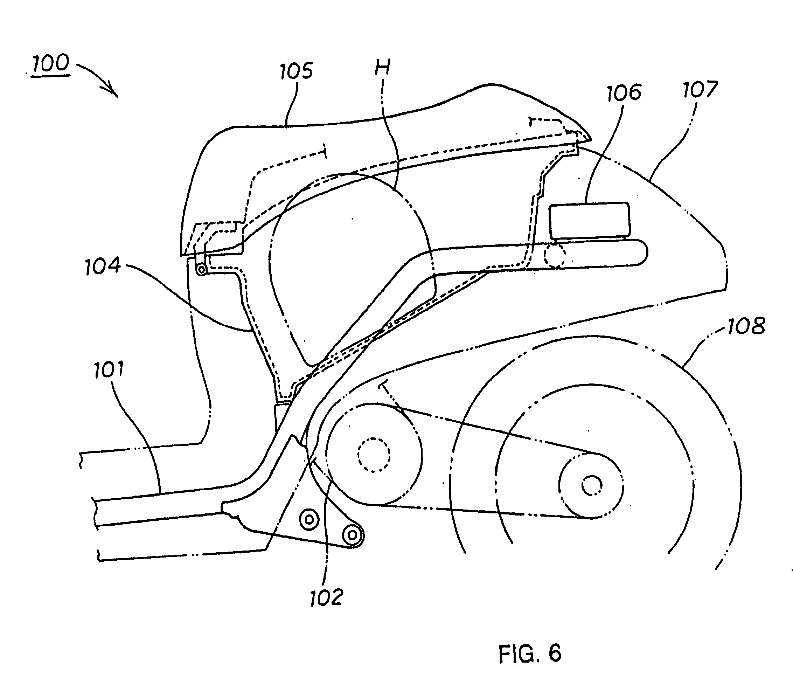

Fig. 6 is a side view of a conventional battery arranging construction for a two-wheeled vehicle.

The conventional battery arranging construction for a two-wheeled vehicle 100 comprises a power unit 102 mounted under a body frame 101, a luggage box 104 capable of housing a helmet H or the like arranged above the power unit 102, a seat 105 serving as a cover for the luggage box 104 arranged above the luggage box 104, and a battery 106 at the rear of the seat 105 and the luggage box 104, the battery 106, the luggage box 104 and the body frame 101 being covered by a seat lower cover 107. Reference numeral 108 designates a rear wheel.

The luggage box 104 as described above is to be able to house a helmet H or the like, and it is necessary for the luggage box 104 to have enough width and depth in order to house the helmet H.

However, in order to secure a sufficient depth for the luggage box 104, it is general that from a viewpoint of restriction in terms of layout of the body frame 101, the power unit 102 and the rear wheel 108, the depth is determined forwardly of the luggage box 104, at which position is necessary to secure the sufficient width for the luggage box 104, and at that position the width of the seat lower cover 107 cannot be made small to pose a restriction of freedom of design.

It is therefore an object of the present invention to provide a battery arranging construction for a two-wheeled vehicle capable of enhancing a freedom of design.

This object is achieved by the features of the characterizing portion of claim 1.

A front wheel and a rear wheel are arranged at the front and rear, respectively, of a body frame, a power unit is arranged between the front and rear wheels, a luggage box and a seat serving as the luggage box is arranged above the power unit, a battery smaller than the luggage box is arranged in front of the luggage box, and a seat lower cover for covering the battery and the luggage box is made into a convergent shape as viewed in plan.

That is, the seat lower cover for covering the battery and the luggage box can be made into a convergent shape as viewed in plan whereby for example, the width of the seat located above the seat lower cover can be narrowed according to the need. That is, the seat lower cover can be made into a convergent shape as viewed in plan whereby the freedom of design is intended to be enlarged.

In claim 1, the battery smaller than the luggage box is arranged in front of the luggage box, and the battery and the luggage box are covered by the seat lower cover in said order whereby the seat lower cover can be made into a convergent shape as viewed in plan. Therefore, for example, the seat width located above the seat lower cover can be narrowed according to the need. That is, the seat lower cover can be made into a convergent shape as viewed in plan whereby an enlargement of freedom of design can be intended.

As a result, it is possible to realize a free design of a two-wheeled vehicle.

The embodiments of the present invention will be described hereinafter with reference to the drawings. Note that the drawings are to be viewed from the direction of reference numerals.
Fig. 1 is a side view of a two-wheeled vehicle having a battery arranging construction according to the present invention.
Fig. 2 is a plan view of a two-wheeled vehicle having a battery arranging construction according to the present invention.
Fig. 3 is a side view of a battery arranging construction for a two-wheeled vehicle according to the present invention.
Fig. 4 is a plan view of a battery arranging construction for a two-wheeled vehicle according to the present invention.
Fig. 5 is an explanatory view of function of a battery arranging construction for a two-wheeled vehicle according to the present invention.
Fig. 6 is a side view of a conventional battery arranging construction for a two-wheeled vehicle.

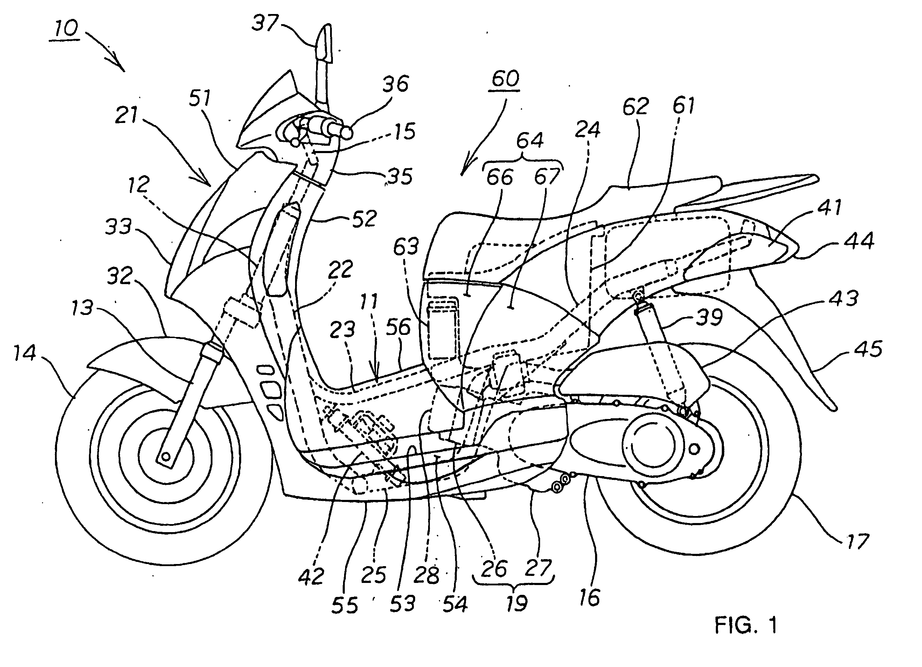

Fig. 1 is a side view of a two-wheeled vehicle having a battery arranging construction according to the present invention.

A two-wheeled vehicle 10 is a motor scooter type two-wheeled vehicle mainly comprising: a front fork 13 mounted on a head pipe 12 of a body frame 11, a front wheel 14 mounted on the front fork 13, a handle 15 connected to the front fork 13, a swing unit 16 mounted on the upper part at the rear of the body frame 11, a rear wheel 17 mounted at the rear of the swing unit 16, a seat 62 arranged on the upper part at the rear of the body frame 11, a power unit 19 arranged under the body frame 11, and a body cover 21 for covering the body frame 11.

The body frame 11 is a cradle type body frame in which a down tube 22 is lowered from the head pipe 12, a center tube 23 is extended backward from the middle of the down tube 22, a pair of left and right rear pipes 24, 24 (the 24 on one side is not shown) are extended from the rear end of the center tube 23, whereas a pair of left and right under pipes 25, 25 (the 25 on one side is not shown) are extended from the middle of the down tube 22, the lower ends of these under pipes 25, 25 are extended backward, and the rear ends thereof are extended upward and joined to the left and right rear pipes 24, 24.

The power unit 19 is a unit comprising an engine 26 and a speed change gear 27, and a water cooling type unit in which a cylinder head 28 of the engine 26 is arranged forwardly of the body. More specifically, the engine 26 is a forwardly inclined engine in which a cylinder shaft (not shown) is inclined at an angle (for example, approximately 15°) with respect to a horizontal line, and the cylinder head 28 is forwardly inclined.

In the drawings, reference numeral 32 designates a front fender; 33 a head lamp; 35 a handle cover; 36 a handle grip; 37 a mirror; 39 a rear suspension; 41 a fuel tank; 42 a radiator for cooling the engine; 43 an air cleaner; 44 a tail lamp; 45 a rear fender; 60 a battery arranging construction for a two-wheeled vehicle (hereinafter referred to as "battery arranging construction 60"), 61 a luggage box; and 63 a battery.

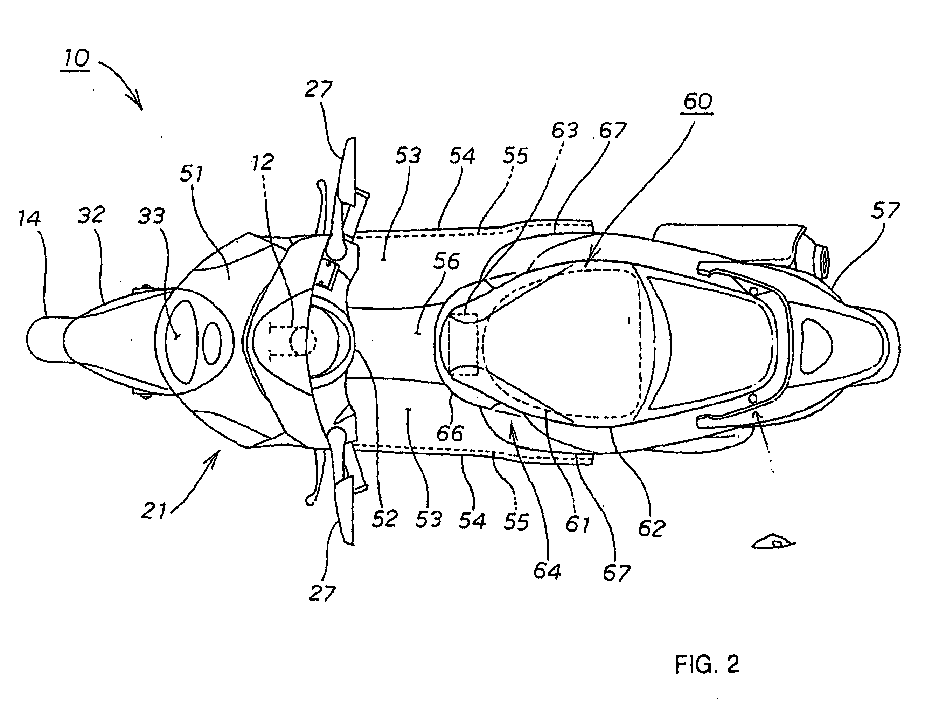

Fig. 2 is a plan view of a two-wheeled vehicle having a battery arranging construction according to the present invention .

A body cover 21 comprises a front cover 51 for covering the front part of a head pipe 12 and the upper part of a front wheel 14, an inner cover 52 for covering the rear part of the front cover 51, left and right floor steps 53, 53 on which feet of a driver are placed, left and right floor skirts 54, 54 extended downward from the outer edges of the floor steps 53, 53, under covers 55, 55 for covering the lower edges of the floor skirts 54, 54, a tunnel cover 56 extended backward from the inner cover 52 to cover the longitudinal center of the body frame 11 (see Fig. 1), a seat lower cover 64 for covering the body frame 11 at the lower part of a seat 62, and a rear cover 57 for covering the rear part of the body frame 11.

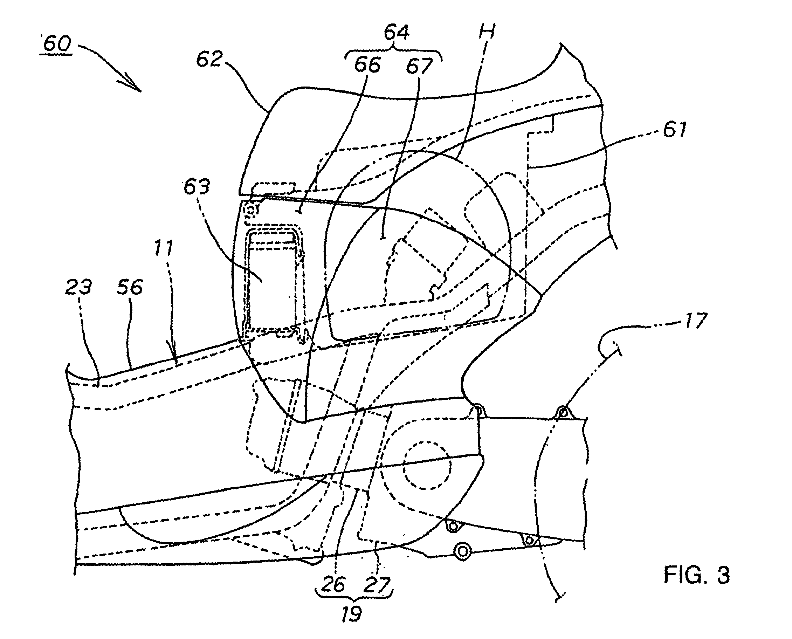

Fig. 3 is a side view of a two-wheeled vehicle having a battery arranging construction according to the present invention. There is provided in a two-wheeled vehicle 10 (see Fig. 1) comprising a front wheel 14 (see Fig. 1) and a rear wheel 17 at the front and rear, respectively, of a body frame 11, a power unit 19 for driving the rear wheel 17 between said front and rear wheels 14, 17, a luggage box 61 capable of housing a helmet H and the like upwardly of said power unit 19 and a seat 62 serving as a cover for the luggage box 61, the bottom of the seat 62 including said luggage box 61 being covered by a seat lower cover 64, the battery arranging construction 60, wherein a battery 63 which is smaller than said luggage box 61 is arranged in front of said luggage box 61, and said battery 63 and said luggage box 61 are covered by said seat lower cover 64 in said order whereby said seat lower cover 64 can be made into a convergent shape as viewed in plan.

Further, the layout of the two-wheeled vehicle 10 (see Fig. 1) in which the battery 63 smaller than the luggage box 61 is arranged in front of the luggage box 61, the luggage box 61 is arranged at the rear of the battery 63, and a fuel tank 41 (see Fig. 1) is arranged at the rear of the luggage box 61 is an arranging construction capable of utilizing effectively to the maximum a space under the seat 62, the seat lower cover 64 can be designed in compact. As a result, a further freedom of design can be intended to be enlarged.

The seat lower cover 64 comprises a center cover 66 for covering the battery 63 at the rear of a tunnel cover 56, and left and right side covers 67, 67 (the 67 on one side is not shown) for covering both sides at the rear of the body frame 11 and the luggage box 61.

That is, in the battery arranging construction 60, the seat lower cover 64 for covering the battery 63 and the luggage box 61 can be made into a convergent shape as viewed in plan whereby for example, the width of the seat 62 located upwardly of the seat lower cover 64 can be narrowed according to the need. That is, the seat lower cover 64 can be made into a convergent shape as viewed in plan whereby an enlargement of freedom of design is intended.

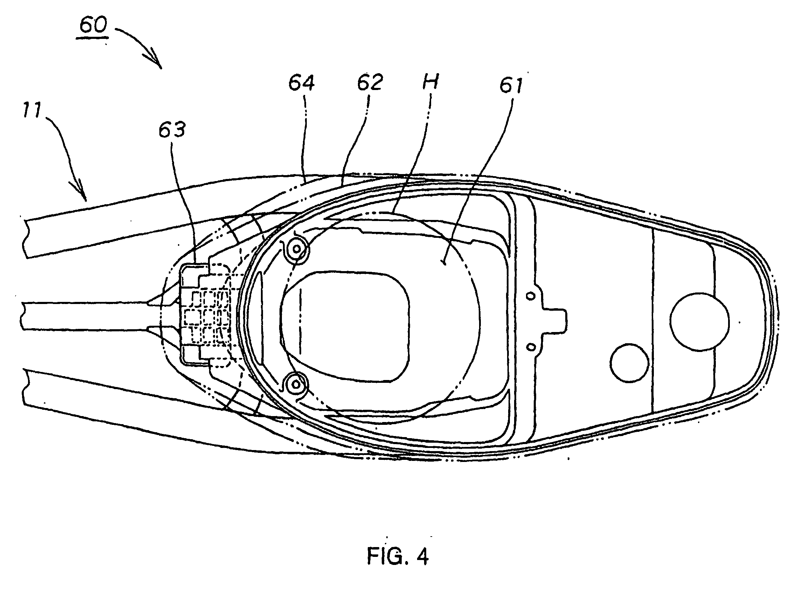

Fig. 4 is a plan view of a battery arranging construction of a two-wheeled vehicle according to the present invention. In the battery arranging construction 60, a power unit 19 (see Fig. 1) is mounted on a body frame 11, a luggage box 61 is arranged above the power unit 19, a seat 62 is arranged above the luggage box 61, a battery 63 is arranged forwardly of the luggage box 61 between the seat 62 and the power unit 19 (see Fig. 1), and the front surface and both sides of the battery 63 are covered by the seat lower cover 64. The seat lower cover 64 is made into a convergent shape asviewed in plan whereby the width of the seat 62 can be narrowed according to the need.

A function of the battery arranging construction described above will be explained hereinafter.

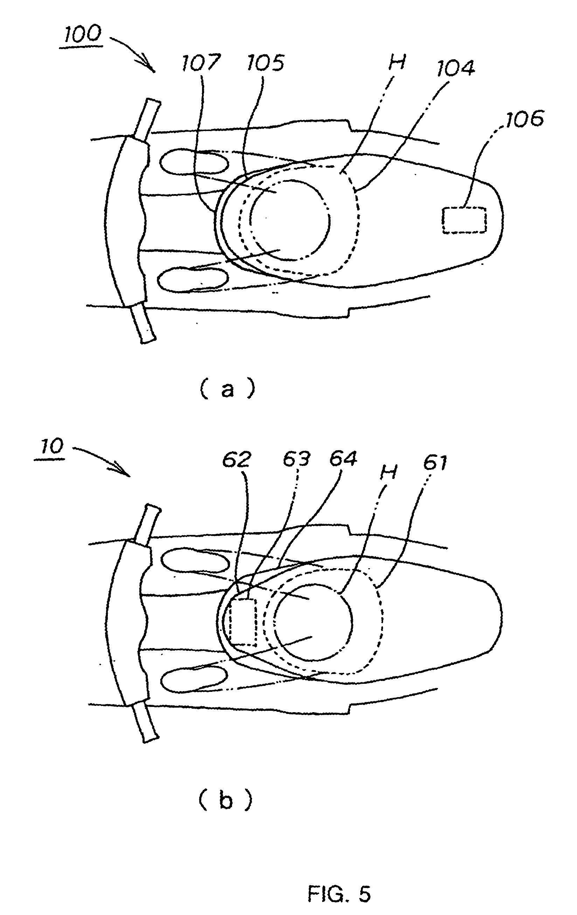

Figs. 5 (a) and 5(b) are respectively function explanatory views of a battery arranging construction for a two-wheeled vehicle according to the present invention, Fig. 5(a) showing a comparative example, Fig. 5(b) being an embodiment.

In Fig. 5(a), according to a battery arranging construction 100 for a two-wheeled vehicle, a seat 105 is arranged above a luggage box, a battery 106 is arranged at the rear of the seat 105 and the luggage box 104, and the battery 106 is covered by a seat lower cover 107. It is necessary to secure a sufficient width for the seat lower cover 107 around the luggage box 104, and the width of the seat lower cover 107 at that position cannot be narrowed, posing a restriction in freedom of design.

In Fig. 5(b), a battery 63 smaller than a luggage box 61 is arranged in front of the luggage box 61, and the battery 63 and the luggage box 61 are covered by a seat lower cover 64 in said order whereby the seat lower cover 64 can be made into a convergent shape as viewed in plan. Therefore, for example, the width of a seat 62 located above the seat lower cover 64 can be narrowed according to the need. That is, the seat lower cover 64 can be made into a convergent shape as viewed in plan whereby an enlargement of freedom of design can be intended.

While in the embodiment, the seat lower cover 64 is formed by being separated into a center cover 66 and left and right side covers 67, 67, as shown in Fig. 1 or 2, it is noted that the embodiment is not limited thereto but the seat lower cover 64 can be formed integrally.

A battery 63 which is smaller than a luggage box 61 is arranged in front of the luggage box 61, and the battery 63 and the luggage box 61 are covered by a seat lower cover 64 in said order whereby the seat lower cover 64 can be made into a convergent shape as viewed in plan.

For example, the width of the seat 62 located above the seat lower cover 64 can be narrowed according to the need. That is, the seat lower cover 64 can be made into a convergent shape as viewed in plan whereby an enlargement of freedom of design can be intended.

## Claims

1. Motor scooter type two-wheeled vehicle comprising a front wheel (14) and a rear wheel (17) at the front and rear, respectively, of a body frame (11), a power unit (19) for driving the rear wheel provided between said front and rear wheels, a luggage box (61) for housing a helmet (H) and the like upwardly of said power unit (19) and a seat (62) serving as a cover for the luggage box (61), the bottom of the seat (62) including said luggage box (61) being covered by a seat lower cover (64), further comprising a battery (63) which is smaller than said luggage box (61), and wherein said battery (63) and said luggage box (61) are covered by said seat lower cover (64) and whereby said seat lower cover (64) is made into a convergent shape towards the front of the vehicle as viewed in plan, **characterized in that** said battery (63) is arranged in front of said luggage box.

## Patentansprüche

1. Zweiradfahrzeug vom Motorrollertyp, umfassend ein Vorderrad (14) und ein Hinterrad (17) an der Vorder- bzw. Rückseite eines Hauptrahmens (11), eine Antriebseinheit (19) zum Antrieb des Hinterrads, die zwischen den Vorder- und Hinterrädern vorgesehen ist, einen Gepäckkasten (61) zur Aufnahme eines Helms (H) und dergleichen oberhalb der Antriebseinheit (19) sowie einen Sitz (62), der als Deckel für den Gepäckkasten (61) dient, wobei der Boden des Sitzes (62) einschließlich des Gepäckkastens (61) von einer unteren Sitzabdeckung (64) abgedeckt sind, femer umfassend eine Batterie (63), die kleiner ist als der Gepäckkasten (61), und worin die Batterie (63) und der Gepäckkasten (61) von der unteren Sitzabdeckung (64) abgedeckt sind und wobei die untere Sitzabdeckung (64) in Draufsicht betrachtet zur Vorderseite des Fahrzeugs hin zu einer konvergenten Form gemacht ist, **dadurch gekennzeichnet, dass** die Batterie (63) vor dem Gepäckkasten angeordnet ist.

## Revendications

1. Véhicule à deux roues de type scooter comprenant une roue avant (14) et une roue arrière (17) respectivement à l'avant et à l'arrière d'un cadre d'ossature (11), un groupe moteur (19) pour entraîner la roue arrière fourni entre lesdites roues avant et arrière, un coffre à bagages (61) pour contenir un casque (H) et analogues situé au-dessus dudit groupe moteur (19) et un siège (62) servant de couvercle au coffre à bagages (61), le fond du siège (62) comprenant ledit coffre à bagages (61) étant recouvert par un couvercle inférieur de siège (64), comprenant de plus une batterie (63) qui est plus petite que ledit coffre à bagages (61) et dans lequel ladite batterie (63) et ledit coffre à bagages (61) sont couverts par ledit couvercle inférieur de siège (64) et de sorte que ledit couvercle inférieur de siège (64) est fabriqué en une forme convergente vers l'avant du véhicule, en vue de dessus, **caractérisé en ce que** ladite batterie (63) est placée devant ledit coffre à bagages.
